# EUROPÄISCHE PATENTSCHRIFT

(11) **EP 1 529 761 B1**
(45) Veröffentlichungstag und Bekanntmachung des Hinweises auf die Patenterteilung: **15.07.2009**
(21) Anmeldenummer: 04026335.2
(22) Anmeldetag: 05.11.2004
(51) Int. Cl.: C03C 17/36

(54) **Thermisch hoch belastbares Low-E-Schichtsystem, Verfahren zu dessen Herstellung und Verwendung der mit dem Schichtsystem beschichteten Substrate**
Thermally highly stable low-E coating system, its fabrication process and use of a substrate coated with such a coating system
Empilement de couches à émissivité E faible à haute résistance thermique, son procédé de fabrication et son utilisation comme revêtement d'un substrat

(30) Priorität: 05.11.2003 DE 10351616
(43) Veröffentlichungstag der Anmeldung: 11.05.2005
(73) Patentinhaber: arcon Flachglas-Veredlung GmbH & Co. KG, 07751 Bucha (DE)
(72) Erfinder: Ruppe, Carsten, 07743 Jena (DE); Söder, Bernhard, 91639 Wolframs-Eschenbach (DE); Frank, Marcus, 07749 Jena (DE)
(74) Vertreter: Epping - Hermann - Fischer

(56) Entgegenhaltungen:
- EP-A- 1 010 677
- WO-A-99/45415
- WO-A-02/062713
- US-A- 4 985 312
- US-A1- 2003 194 570

## Beschreibung

Die Erfindung betrifft ein thermisch hoch belastbares Low-E-Schichtsystem für transparente Substrate, insbesondere für Floatglas, welches für ebene und gebogene Fensterscheiben, als Isolierverglasung und Verbundsicherheitsglas verwendet wird, und ein Verfahren zu seiner Herstellung, vorzugsweise mit einem Vakuumbeschichtungsverfahren.

Derartig beschichtete Glasscheiben werden hauptsächlich zur Wärmedämmung eingesetzt und werden je nach Verwendungszweck vorgespannt und/oder gebogen. Die ebenen Glasscheiben dienen der Verglasung von Fenstern und die gebogenen Glasscheiben können z.B. als Fahrzeugscheiben zum Einsatz kommen.

Für derartig beschichtetes Floatglas besteht die Forderung, dass das Schichtsystem ein niedriges Emissions- bzw. hohes Reflexionsvermögen im infraroten Teil des elektromagnetischen Spektrums aufweist. Diese Funktion wird durch eine elektrisch leitfähige Schicht, meist eine Silberschicht (Funktionsschicht) erzielt.

Um die Sonnenenergie für die Energiebilanz eines Gebäudes nutzen zu können, muss ein möglichst hoher Anteil des Sonnenspektrums (300 nm - 2500 nm) in das Rauminnere gelangen. Dies beinhaltet auch den sichtbaren Spektralbereich und führt zu der Forderung nach einer hohen und farbneutralen Lichttransmission.

Um mit einer Zweischeiben-Isolierverglasung, deren Scheibenzwischenraum (16 mm) mit Argon gefüllt ist (Füllgrad 90 %), nach DIN EN 673 einen Ug-Wert von 1.2 W/m²K zu erreichen, muss mindestens eine zum Scheibenzwischenraum weisende Oberfläche ein Emissionsvermögen von höchstens 4 % aufweisen. Diese Forderung bestimmt weitgehend die geometrische Dicke der Funktionsschicht. Diese beträgt etwa zwischen 9 nm und 15 nm.

Da die Funktionsschicht der genannten Dicke, die vorzugsweise aus einem Edelmetall, insbesondere aus Silber besteht, jedoch im sichtbaren Spektralbereich metallisch reflektiert, wird die in das Gebäude eingetragene Sonnenenergie und das Sonnenlicht vermindert. Deshalb sind unterhalb und oberhalb der Silberschicht weitere transparente Schichten aus oxidischen Materialien angeordnet, die auch Entspiegelungsschichten genannt werden. Aus diesem Grund besteht das einfachste Low-E-Schichtsystem aus mindestens drei Schichten, der unteren Entspiegelungsschicht, (Grundschicht), der Funktionsschicht (Edelmetall) und der oberen Entspiegelungsschicht (Deckschicht).

Um beim Aufbringen der Silberschicht ein möglichst gutes Kristallwachstum zu erreichen, wird bekannterweise mindestens eine weitere Grundschicht direkt unterhalb der Silberschicht, die sog. Aufwachs- oder Primärschicht, meist aus Zinkoxid, aufgebracht. Die Herstellung von Low-E-Schichtsystemen erfolgt meist in Inline-Anlagen durch Vakuumbeschichtung, vorzugsweise Magnetronsputtern (Kathodenzerstäuben). Die Silberschichten werden dabei von einem metallischen Target in einer Inertgasatmosphäre, vorwiegend in Argon, und die Entspiegelungsschichten meist von einem metallischen Target in einer gemischten Atmosphäre aus Inertgas und Reaktivgas (z.B. Sauerstoff) aufgesputtert.

Beim Aufbringen einer oxidischen Deckschicht auf die Silberschicht in einer sauerstoffhaltigen Reaktivgasatmosphäre besteht der Nachteil, dass die außerordentlich dünne Silberschicht der sauerstoffhaltigen Reaktivgasatmosphäre ausgesetzt wird. Das elementare Silber oxidiert und die eigentliche Funktion dieser Schicht, die Wärmereflexion, ist nicht mehr gegeben.

Um diese nachteilige Reaktion zu verhindern, wird in der Regel eine sehr dünne, rein metallische oder sog. unterstöchiometrische Metalloxidschicht auf die Silberschicht aufgebracht, die häufig als Schutzschicht, Opferschicht, Barriereschicht oder Blockerschicht bezeichnet wird. Beim Aufbringen der Barriereschicht im Vakuum wird gerade soviel Sauerstoff zugegeben, dass das Silber nicht oxidiert. Die Barriereschicht bekommt durch dieses Sauerstoffunterangebot mehr metallischen Charakter. Bei der Beschichtung der Barriereschicht mit der Deckschicht wird diese Barriereschicht der aggressiven Sauerstoffatmosphäre ausgesetzt und oxidiert mindestens teilweise, d.h. die Schicht wird dabei weitestgehend stöchiometrisch.

Es sind im Wesentlichen folgende Low-E-Schichtsysteme als Stand der Technik mit dem folgenden prinzipiellen Aufbau bekannt:
Oxidschicht(en) - Primärschicht - Funktionsschicht - Barriereschicht - Oxidschicht(en)

In zunehmendem Maß wird eine weitere Anforderung an Low-E-Schichtsysteme gestellt. Die Beschichtungen sollen thermischen Biege- und Vorspannprozessen ohne Einbußen in ihrer Funktion standhalten. Bei diesen Prozessen wird das bereits beschichtete Glas einige Minuten auf ca. 650°C, d.h. bis zur Erweichungstemperatur des Glases erwärmt und durch schockartiges Abkühlen gehärtet. Das Biegen erfolgt zwischen dem Erwärmen und dem Abkühlen. Durch die hohe Prozesstemperatur können je nach Ausgestaltung des Low-E-Schichtsystems verschiedene mikroskopische Defektmechanismen ausgelöst werden. Das sind Agglomeration des Silbers, Oxidation des Silbers, Diffusionsprozesse, Delamination und Rekristallisation der Entspiegelungsschichten. Diese Mechanismen führen meist zu einer Erhöhung des Emissionsvermögens und zu einer signifikanten Erhöhung des diffus reflektierten Streulichts. Je nach Schichtzusammensetzung können sich Lichttransmission, Lichtreflexion sowie Transmissions- und Reflexionsfarben erheblich ändern.

Daher gehen die Anforderungen an die Schichtsysteme dahin, dass sie sowohl vor als auch nach dem Hochtemperaturprozess die gewünschten optischen, elektrischen und mechanischen Eigenschaften aufweisen, d.h. dass sich diese Eigenschaften während des Temperaturprozesses nicht oder zumindest nur unwesentlich ändern. Es sind bereits viele Versuche unternommen worden, die Defektmechanismen weitgehend zu unterbinden, doch zufriedenstellend ist diese Aufgabe bisher noch nicht gelöst worden. Herkömmliche Schichtsysteme erhalten ihre vorteilhaften Eigenschaften erst nach dem Hochtemperaturprozess, d.h. sie sind so aufgebaut, dass sich die gewünschten Schichteigenschaften erst durch das Vorspannen oder Biegen durch eine signifikante Änderung gezielt einstellen. Nachteilig ist, dass der Vorspann- oder Biegeprozess dadurch zwingend erforderlich ist.

Der Stand der Technik wird im Wesentlichen durch folgende Schutzrechte dokumentiert:

In der EP 1 238 950 A2 wird ein Schichtsystem beschrieben, in dem Si-reiche Siliziumnitridschichten direkt auf dem Substrat, sowie sauerstoffarme NiCrOₓ-Schichten unterhalb und oberhalb der Silberschicht abgeschieden werden. Die obere NiCrOₓ-Schicht hat hauptsächlich die Aufgabe, das Silber während des Produktionsprozesses vor aggressiven Sauerstoffatmosphären bei der Abscheidung der nachfolgenden transparenten dielektrischen Schichten zu schützen. Darüber hinaus wirkt es gemeinsam mit der unteren NiCrOₓ-Schicht als Schutzschicht für das Silber in einem nachfolgenden Hochtemperaturprozess. Nachteilig an diesem Schichtaufbau ist der Einsatz der unterstöchiometrischen Schichten (SiₓN_{y} und NiCrOₓ). Diese Schutzschichten oxidieren und werden dadurch transparenter. Ein weiterer Nachteil ist, dass sich dadurch während des Vorspannprozesses der optische Eindruck des gesamten beschichteten Glases ändert. Die Transmission steigt an und die Transmissions- und Reflexionsfarben ändern sich entsprechend.

In der EP 1 174 397 A2 werden hochtemperaturbeständige Low-E Schichtsysteme beschrieben. Es werden Silberschichten angeordnet, die beidseitig von NiCrOₓ-Schichten umgeben sind. Dabei ist wenigstens die oberhalb der Silberschicht angeordnete NiCrOₓ-Schicht als Gradientenschicht ausgebildet, wobei der Oxidationsgrad ausgehend vom Silber hin zur nächsten Schicht zunimmt. Bei einer entsprechend dicken NiCrOₓ-Schicht stellt sich der Oxidationsgradient ohnehin ein, sobald die Probe nach der Beschichtung mit NiCrOₓ dem nächsten Sauerstoffplasma ausgesetzt wird. Hier wird die äußere Grenzfläche der NiCrOₓ-Schicht zuerst oxidiert, wobei sie gleichzeitig mit der darauffolgenden dielektrischen Schicht belegt wird. Nachteilig ist, dass bei einem der Beschichtung nachfolgenden Temperaturprozess die untere NiCrOₓ-Schicht und die obere Gradientenschicht weitgehend vollständig oxidieren, transparenter werden und dadurch den gesamten optischen Eindruck der Beschichtung ändern.

In einer Vielzahl von Lösungen wird mindestens eine metallische oder unterstöchiometrische Schicht zum Schutz des Silbers verwendet, wodurch sich als Nachteil die Eigenschaften der Beschichtung beim Temperaturprozess ändern.

In der EP 1 182 175 A1 sind im Gegensatz zu der EP 1 174 397 A2 die NiCrOₓ-Schichten durch rein metallische Chrom-Pufferschichten ersetzt. Diese Ausführung hat den Nachteil, dass Transmissions- und Farbveränderungen während des Vorspannens bzw. des Biegens noch verstärkt werden.

In der DE 198 48 751 C1 wird die Verwendung von Zn-Stannatschichten verschiedener Legierungsgrade beschrieben, welche geringe Anteile verschiedenster Elemente, insbesondere A1 oder Sb enthalten können. Diese Materialkomposition dient als Diffusionsbarriere.

In der EP 1 047 644 B1 ist eine Anordnung mit einer Barriereschicht beschrieben, welche aus einer Aluminium-Metalllegierung besteht, wobei das Legierungsmetall aus Mg, Mn, Cu, Zn, Ni, oder Si besteht. Die Schicht hat rein metallischen Charakter.

In der EP 0 999 192 B1 ist eine Lösung beschrieben, die eine 0.1 nm bis 3.0 nm dicke NiCrOₓ-Schicht beinhaltet, die in die Edelmetallschicht eingebettet ist.

In den in den drei zuletzt genannten Druckschriften beschriebenen Ausgestaltungsformen werden unterstöchiometrische oder metallische Schichten als Barriereschicht eingesetzt, was zu den bereits genannten Nachteilen führt.

In der EP 1 060 140 B1 wird der Silberschicht eine Metallkomponente (5 at% bis 20 at%) zulegiert, die eine hohe Affinität zu Sauerstoff hat. Diese strebt während der Wärmebehandlung zu den Grenzflächen zwischen dem Silber und den benachbarten Schichten eine Oxidation an und schützt dadurch das Silber selbst vor der Oxidation.
Ein Nachteil dieser Lösung besteht darin, dass diese Schutzschicht erst während des thermischen Vorspannens entsteht und es kann auf eine herkömmliche metallische Blockerschicht zum Schutz des Silbers während der Schichtherstellung, ("Puffer-Schicht"), z.B. aus Nb oder NiCr, nicht verzichtet werden. Weiterhin ist nachteilig, dass selbst nach der Temperaturbehandlung ein geringer Anteil der zum Silber zulegierten Fremdatome nicht an die Grenzflächen diffundiert und in der Silberschicht verbleibt. Diese vermindern in erheblichem Maß die Leitfähigkeit und damit das Wärmereflexionsvermögen.

In der DE 198 52 358 C1 wird ein Schichtsystem beschrieben, das sich zum thermischen Vorspannen eignet. Wesentliche Bestandteile des Schichtsystems sind eine 4 nm dicke metallische Zinkschicht unterhalb der Silberschicht, eine 3 nm dicke metallische AlZnMn-Schicht oberhalb der Silberschicht, sowie eine ZnO-haltige Mischoxidschicht mit Spinellstruktur als Deckschicht. Nachteilig ist, wie auch beschrieben, dass zum thermischen Vorspannen die Dicke der AlZnMn-Schicht auf 7 nm erhöht werden muss, wodurch sich die Transmission bei 550 nm von 83.1 % auf 70 % verringert. Diese Verminderung der Transmission wird während des Vorspannens durch Oxidation der AlZnMn-Schicht wieder kompensiert. Auch die damit einhergehende nachteilige Änderung der Reflexionsfarbwerte wird beschrieben.

In der EP 0 718 250 B1 werden sowohl besondere Deckschichten beschrieben, welche Diffusionsbarrieren gegen Sauerstoff darstellen, als auch besondere Grundschichten, die die Diffusion von Na⁺-Ionen aus dem Floatglas in das Schichtsystem verhindern sollen. Beide als Barriereschichten wirkende Schichten basieren auf Si-Verbindungen. Auch hierbei besteht der Nachteil, dass eine metallische Schutzschicht, insbesondere aus Nb, Ta, Ti, Cr, Ni und Legierungen dieser Metalle direkt auf dem Silber aufgebracht wird.

Aus den Druckschriften WO 02/062713 A und US 2003/0194570 A1 sind Schichtsysteme bekannt, die nicht stöchiometrische Schichten als Barriereschichten enthalten.

Die zuvor beschriebenen Lösungen gemäß dem Stand der Technik verwenden metallische oder unterstöchiometrische Schichten als Barriereschichten, die den Nachteil aufweisen, dass sich die Schichteigenschaften, wie Lichttransmission, Reflexion, Farbwerte sowie Schichtwiderstand während einer thermischen Behandlung zum Vorspannen und/oder Biegen signifikant ändern.

In der Druckschrift WO 99/45415 wird die Verwendung einer 82 nm dicken Barriereschicht aus AlN, mit der Spannungen im Schichtsystem verringert werden sollen, beschrieben. Weiterhin sind in der Druckschrift EP 1010677 A1 Schichtsysteme mit Barrierenschichten aus AlN offenbart, die eine Dicke von 20 nm oder mehr aufweisen.

Der Erfindung liegt daher die Aufgabe zugrunde, ein thermisch hoch belastbares Schichtsystem herzustellen, welches sich in seinen optischen und elektrischen Eigenschaften nur in so engen Grenzen ändert, dass das beschichtete Glas im Isolierglasaufbau sowohl unbehandelt als auch thermisch vorgespannt und/oder gebogen eingesetzt werden kann, und der Unterschied vom menschlichen Auge kaum wahrgenommen wird. Das Schichtsystem soll sowohl für ebene und gebogene einfache Verglasungen geeignet sein als auch für gebogenes und/oder laminiertes Verbundsicherheitsglas und Isolierverglasungen. Das Verfahren zur Herstellung des Schichtsystems soll ein an sich bekanntes hochproduktives und wirtschaftliches Vakuumbeschichtungsverfahren sein und soll die vorgegebenen hohen Anforderungen an die optischen Parameter des Schichtsystems für die verschiedensten Anwendungen garantieren.

Diese Aufgaben werden durch ein Schichtsystem nach Patentanspruch 1 bzw. ein Verfahren nach Patentanspruch 10 gelöst. Vorteilhafte Ausgestaltungen des Schichtsystems bzw. des Verfahrens sind Gegenstand der Ansprüche 2 bis 9 und 11 bis 15. Bevorzugte Verwendungen von mit dem Schichtsystem beschichteten Substraten sind Gegenstand der Ansprüche 16 bis 21.

Ein Low-E-Schichtsystem für transparente Substrate, vorzugsweise Glas, bestehend aus mindestens einer Grundschicht, mindestens einer Funktionsschicht aus Silber, mindestens einer Barriereschicht und mindestens einer Deckschicht, wobei sich diese Schichtfolge innerhalb des gesamten Schichtsystems wiederholen kann, ist gemäß der Erfindung derart ausgeführt, dass direkt über der Funktionsschicht eine Barriereschicht aus einem Metallnitrid, für dessen Extinktionskoeffizienten k(λ) im Wellenlängenbereich 380 nm ≤ λ ≤ 780 nm k(λ) < 0.2 gilt, wie zum Beispiel AlN oder BN, mit einer Dicke von 1 nm bis 10 nm, angeordnet ist. Die Grundschicht(en) und Deckschicht(en) bestehen aus Oxid- und/oder Nitridverbindungen. Sowohl oberhalb als auch unterhalb der Funktionsschicht sind weder Metallschichten noch überwiegend unterstöchiometrische Metallverbindungen angeordnet.

Überraschend wurde festgestellt, dass eine Barriereschicht aus einem Metallnitrid wie zum Beispiel Aluminiumnitrid oder Bornitrid, mit einer Schichtdicke zwischen 1 nm und 10 nm, einen ausreichenden Schutz für die Funktionsschicht darstellt. Beim Aufbringen der Barriereschicht auf die Funktionsschicht in einer nitridischen Gasatmosphäre wird die Funktionsschicht selbst vorteilhaft nicht angegriffen. Die Barriereschicht schützt die Funktionsschicht bei dem Aufbringen der Deckschicht in der dafür erforderlichen reaktiven Sauerstoffatmosphäre vor Oxidation. Wesentlich ist dabei, dass weder unterstöchiometrische noch metallische Barriereschichten benötigt werden. Bevorzugt wird eine Barriereschicht verwendet, die eine weitestgehend stöchiometrische Zusammensetzung aufweist. Insbesondere werden gemäß der Erfindung keine Schichten aus einem Metall, einer Metalllegierung oder einem Metalloxid (sog. Opfermetallschichten) als Barriereschichten verwendet.

Besonders bevorzugt besteht die Barriereschicht aus Aluminiumnitrid in weitestgehend stöchiometrischer Zusammensetzung (AlN). Es hat sich gezeigt, dass während der thermischen Behandlung der Stickstoff aus dem Aluminiumnitrid verdrängt und durch Sauerstoff ersetzt wird, so dass eine Al₂O₃- Schicht mit einer ausgezeichneten Adhäsion zur Funktionsschicht aus Silber gebildet wird. Es wurde nachgewiesen, dass sich Aluminiumnitrid sehr gut dazu eignet, während des Hochtemperaturprozesses die Migration von Elementen und/oder Verbindungen der Schichtmaterialien durch die Schichtenfolge hindurch und/oder vom Substrat in die Schichtenfolge und/oder von der Atmosphäre in die Schichtenfolge, vorrangig dabei in die Funktionsschicht hinein und/oder durch die Funktionsschicht hindurch zu minimieren bzw. zu unterbinden, wodurch die wesentlichen der eingangs beschriebenen Defektmechanismen unterbunden werden.

Besonders bevorzugt sind in dem gesamten Schichtsystem keine Schichten enthalten, die eine Verbindung mit einer nichtstöchiometrischen Zusammensetzung aufweisen. Dadurch wird insbesondere eine Änderung der optischen Eigenschaften des Schichtsystems durch einen Temperaturprozess vorteilhaft verhindert.

Es ist weiterhin vorteilhaft, mindestens eine weitere Barriereschicht als eine Teilschicht innerhalb der Grundschicht anzuordnen, um insbesondere eine Diffusion von Atomen oder Ionen aus dem Substrat in das Schichtsystem zu verhindern. Dazu grenzt die als Barriereschicht wirkende Teilschicht vorzugsweise unmittelbar an das Substrat an. Weiterhin kann auch mindestens eine weitere Barriereschicht als eine Teilschicht in die Deckschicht integriert sein, um das Schichtsystem, insbesondere die Funktionsschicht, vorteilhaft vor Umgebungseinflüssen (beispielsweise Oxidation an Luft, Eindringen von Fremdstoffen) zu schützen.

Eine weitere vorteilhafte Ausgestaltung des Schichtsystems besteht darin, dass die Grundschicht und/oder Deckschicht aus Teilschichten gebildet ist, und diese aus oxidischen und/oder nitridischen Metallverbindungen oder Metalllegierungen bestehen.

Ein wesentlicher Vorteil des erfindungsgemäßen Schichtsystems besteht darin, dass sowohl oberhalb als auch unterhalb der Funktionsschicht ausschließlich weitestgehend absorptionsfreie Schichten, also weder Metallschichten noch überwiegend unterstöchiometrische Metallverbindungen angeordnet sind. Für die Grundschicht(en), die Deckschicht(en) und insbesondere für die erfindungsgemäße Barriereschicht gilt im Spektralbereich 380 nm ≤ λ ≤ 780 nm für den Extinktionskoeffizienten k(λ) < 0.2.

Die weiteren Parameter des Schichtsystems, insbesondere die erforderlichen Schichtdicken, werden in bekannter Weise berechnet, damit die gewünschten optischen und energetischen Werte erreicht werden.

Das Schichtsystem wird in einer an sich bekannten Vakuumbeschichtungsanlage, vorzugsweise mittels magnetfeldunterstützter reaktiver Kathodenzerstäubung, auf das Substrat aufgebracht. Die einzelnen Schichten werden bevorzugt in Vakuumfolge im Durchlauf durch mehrere Beschichtungsstationen aufgebracht. Die Prozess- und Anlagenparameter werden dabei in bekannter Weise so gewählt, dass die benötigten Schichtdicken und Schichteigenschaften der einzelnen Schichten erreicht werden.

Bei der Herstellung der Barriereschicht ist es wesentlich, dass eine weitestgehend stöchiometrische Nitridschicht erzeugt wird, für deren Extinktionskoeffizienten k(λ) im Wellenlängenbereich 380 nm ≤ λ s 780 nm k(λ) < 0.2 gilt. Diese Schichteigenschaft wird während der Herstellung der Barriereschicht durch den eingestellten Stickstoffpartialdruck bestimmt. Bei einem geringen Stickstoffpartialdruck können mit hohen Beschichtungsraten unterstöchiometrische Nitridschichten mit weitgehend metallischem Charakter und hohem Absorptionsvermögen hergestellt werden. Bei einem hohen Stickstoffpartialdruck können die geforderten weitgehend stöchiometrischen Nitridschichten hergestellt werden.

Um den optimalen Stickstoffpartialdruck zu ermitteln, mit welchen die gewünschten Schichteigenschaften erzielt werden, werden in einer Versuchsreihe Nitridschichten verschiedener Dicke und verschiedener optischer Eigenschaften hergestellt, wobei der Stickstoffpartialdruck variiert wird. Es werden mit einem geeigneten Verfahren (z.B. Röntgenreflektometrie) die Schichtdicken der einzelnen Proben gemessen und die Schichtparameter, insbesondere k(λ), rechnerisch bestimmt. Der optimale Stickstoffpartialdruck ist der minimale Druck, mit welchem Schichten hergestellt werden können, für die für alle Wellenlängen 380 nm ≤ λ s 780 nm gerade noch k(λ) < 0.2 gilt. Bei der magnetfeldverstärkten reaktiven Kathodenzerstäubung wird der so ermittelte Arbeitspunkt der Kathode mit einem bekannten Regelmechanismus konstant gehalten.

Um eine bessere Langzeitstabilität der Beschichtungsrate und eine bessere Homogenität der Nitridschichten gegenüber dem ungepulsten D.C.-Sputtern zu erreichen, ist es vorteilhaft, die Schichten mittels gepulstem D.C.-Sputtern, vorzugsweise reaktivem Mittelfrequenzsputtern aufzubringen. In dieser Verfahrensvariante besteht außerdem der Vorteil, dass das verbleibende "arcing" weitgehend unterdrückt wird.

Entsprechend dem Einsatzgebiet der beschichteten Glasscheiben kann es erforderlich sein, diese vorzuspannen oder zu biegen. Das erfolgt bekannterweise derart, dass die beschichteten Glasscheiben hoch erhitzt werden und danach gebogen und wieder abgekühlt werden. Für diese Temperaturbehandlung der fertig beschichteten Glasscheiben ist der Beschichtungseinrichtung eine an sich bekannte Erwärmungseinrichtung, Biegeeinrichtung und Abkühleinrichtung nachgeordnet. Ist eine Temperaturbehandlung, insbesondere zum Vorspannen oder Biegen erforderlich, dann ist das Temperaturregime durch die Wahl der Temperatur und der Dauer der Temperatureinwirkung so festzulegen, dass das Glas der jeweiligen Dicken gebogen und/oder vorgespannt werden kann.

Der Vorteil des erfindungsgemäßen Schichtsystems besteht darin, dass die Barriereschichten aus einem Metallnitrid, insbesondere aus Aluminium- oder Bornitrid, im Vergleich zu metallischen oder unterstöchiometrischen Metalloxidschichten nahezu absorptionsfreie und damit hochtransparente, dielektrische Schichten sind. Somit wird die Lichttransmission des nicht vorgespannten Produktes nicht gesenkt. Bei der Herstellung der Barriereschicht wird in der Stickstoffatmosphäre die Funktionsschicht nicht beeinträchtigt und die Barriereschicht schützt die Funktionsschicht bei dem Aufbringen der Deckschicht in der dafür erforderlichen reaktiven Sauerstoffatmosphäre vor Oxidation. Darüber hinaus ist die Barriereschicht mechanisch und chemisch sehr widerstandsfähig und weist eine geringe Oberflächenrauhigkeit auf.

Ein Vorteil einer besonders bevorzugten Barriereschicht aus Aluminiumnitrid besteht darin, dass während des thermischen Vorspannens der Stickstoff aus dem Aluminiumnitrid verdrängt und durch Sauerstoff ersetzt wird, so dass eine Al₂O₃-Barriereschicht entsteht. Die Extinktion k(λ) der beiden dielektrischen Schichtmaterialien AlN und Al₂O₃ unterscheidet sich im sichtbaren Spektralbereich zwischen 380 nm und 780 nm nur unbedeutend (maximal etwa Δk = 0.01) und die mittlere Differenz der Dispersion der beiden Materialien im sichtbaren Spektralbereich von etwa Δn = 0.35 bewirkt aufgrund der geringen Barriereschichtdicken kaum eine Änderung der optischen Parameter der Beschichtung während des Vorspannprozesses. Aus diesem Grund können die optischen Parameter der Beschichtung, wie Lichttransmission, Lichtreflexion sowie die Farbwerte während des Vorspannens in extrem engen Grenzen konstant gehalten werden. Das Silber der Funktionsschicht ist durch die Barriereschicht während des Vorspannprozesses geschützt, so dass die beschriebenen Defektmechanismen nicht eintreten. Der Schichtwiderstand und damit das Emissionsvermögen bleiben nach dem Vorspannprozess weitgehend gleich und die diffuse Lichtstreuung bleibt kleiner als 0.5 %. Durch den Schichtaufbau und insbesondere durch die Barriereschicht bleiben also alle wesentlichen Schichtparameter während des Vorspannprozesses erhalten, so dass dieser nicht mehr zwingend durchgeführt werden muss, um die gewünschten Schichteigenschaften zu erhalten.

Die Erfindung wird im Folgenden anhand von drei Ausführungsbeispielen im Zusammenhang mit den Figuren 1 bis 3 näher erläutert.

Es zeigen:
Fig. 1: Eine schematische Darstellung eines Querschnitts durch ein Schichtsystem gemäß einem ersten Ausführungsbeispiel der Erfindung,
Fig. 2: Eine schematische Darstellung eines Querschnitts durch ein Schichtsystem gemäß einem zweiten Ausführungsbeispiel der Erfindung und
Fig. 3: Eine schematische Darstellung eines Querschnitts durch ein Schichtsystem gemäß einem dritten Ausführungsbeispiel der Erfindung.

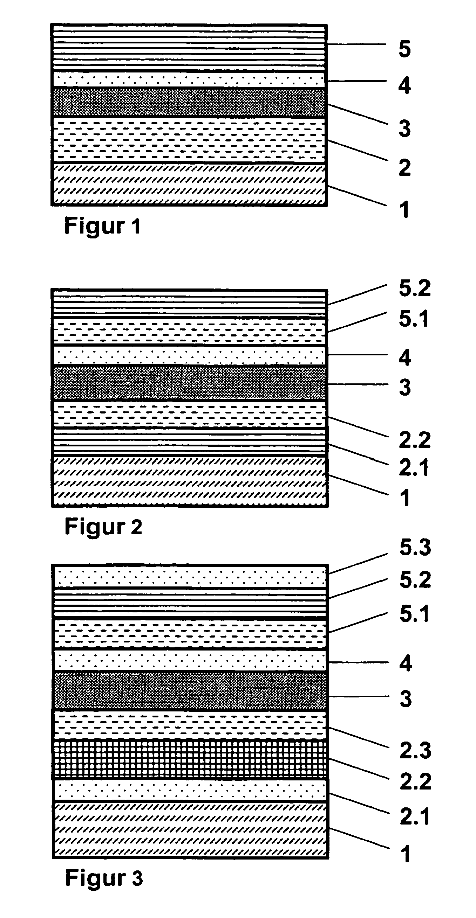

Bei dem in Fig. 1 dargestellten Ausführungsbeispiel der Erfindung ist auf einem Substrat 1, beispielsweise Floatglas, ein Schichtsystem aufgebracht, das eine Grundschicht 2 enthält, die zum Beispiel aus ZnO besteht. Auf die Grundschicht 2 ist eine Funktionsschicht 3 aus Ag aufgebracht. Auf die Funktionsschicht 3 folgt eine Barriereschicht 4 aus einem Metallnitrid, die vorzugsweise aus Aluminiumnitrid oder Bornitrid besteht. Abschließend ist eine Deckschicht 5, beispielsweise aus SnO₂, aufgebracht.

Bei dem in Fig. 2 dargestellten Ausführungsbeispiel der Erfindung ist das Schichtsystem im Vergleich zur Fig. 1 dahingehend erweitert, dass die Grundschicht 2 aus einer ersten Teilschicht 2.1 aus SnO₂ und einer zweiten Teilschicht 2.2 aus ZnO gebildet ist. Die Deckschicht 5 setzt sich zusammen aus einer Teilschicht 5.1 aus ZnO und einer darüber angeordneten Teilschicht 5.2 aus SnO₂.

Bei dem in Fig. 3 dargestellten Ausführungsbeispiel der Erfindung besteht die auf dem Substrat 1 befindliche Grundschicht 2 aus einer Teilschicht 2.1, die wie die Barriereschicht 4 aus einem Metallnitrid, insbesondere aus AlN oder BN, besteht, einer zweiten Teilschicht 2.2, zum Beispiel aus einem hochbrechenden Material wie Titan-, Niob-, Tantal- oder Zirkonoxid, und einer dritten Teilschicht 2.3, beispielsweise aus ZnO. Auf die Grundschicht 2 sind eine Funktionsschicht 3 aus Silber und eine Barriereschicht 4 aus einem Metallnitrid, insbesondere AlN oder BN, aufgebracht. Die Deckschicht 5 besteht in der Folge von der Barriereschicht 4 ausgehend aus einer Teilschicht 5.1, beispielsweise aus ZnO, einer Teilschicht 5.2, zum Beispiel aus SnO₂, und einer Teilschicht 5.3, die wie die Barriereschicht 4 aus einem Metallnitrid besteht, vorzugsweise aus AlN oder BN.

Die in die Grundschicht 2 bzw. in die Deckschicht 5 integrierten Teilschichten 2.1, 5.3 aus einem Metallnitrid fungieren als weitere Barriereschichten. Bevorzugt bestehen sie aus dem gleichen Material wie die Barriereschicht 4. Die in die Grundschicht 2 integrierte Barriereschicht 2.1 wirkt vorteilhaft als Diffusionsbarriere für Atome oder Ionen, insbesondere Na⁺-Ionen, die bei einem Temperaturprozess aus dem Substrat in das Schichtsystem eindringen könnten. Besonders bevorzugt grenzt die in die Grundschicht 2 integrierte Barriereschicht 2.1 direkt an das Substrat an. Weiterhin ist es vorteilhaft, wenn die in die Deckschicht 5 integrierte Barriereschicht 5.3 direkt an das Umgebungsmedium, beispielsweise Luft, angrenzt, um das Schichtsystem vor Oxidation und/oder Umgebungseinflüssen zu schützen.

Die erfindungsgemäßen Schichtsysteme können zur Beschichtung von beliebigen Glasscheiben wie beispielsweise Floatglas, insbesondere für Fensterscheiben, verwendet werden. Die beschichteten Glasscheiben können zu ebenen und/oder gebogenen Sicherheitsverglasungen, zu laminiertem Sicherheitsglas, oder auch zu Isolierverglasungen weiterverarbeitet werden.

## Patentansprüche

1. Thermisch hoch belastbares, wärmereflektierendes Low-E Schichtsystem für transparente Substrate (1), vorzugsweise Glas, mit mindestens folgendem Schichtaufbau, bestehend aus mindestens einer Grundschicht (2) aus einer Oxidverbindung und/oder einer Nitridverbindung, mindestens einer Funktionsschicht (3) aus Silber, mindestens einer Barriereschicht (4), und mindestens einer Deckschicht (5) aus einer Oxidverbindung und/oder einer Nitridverbindung,
**dadurch gekennzeichnet, dass**
die über der Funktionsschicht (3) angeordnete Barriereschicht (4) aus einem Metallnitrid besteht, für dessen Extinktionskoeffizienten k(λ) im Wellenlängenbereich 380 nm s λ ≤ 780 nm für jedes λ k(λ) < 0,2 gilt, wobei das Schichtsystem sowohl oberhalb als auch unterhalb der Funktionsschicht (3) weder Metallschichten noch nichtstöchiometrische Metallverbindungen enthält, und die Barriereschicht (4) eine Dicke von 1 nm bis 10 nm aufweist.

2. Thermisch hoch belastbares, wärmereflektierendes Low-E Schichtsystem nach Anspruch 1,
**dadurch gekennzeichnet, dass**
die Barriereschicht (4) eine weitestgehend stöchiometrische Zusammensetzung aufweist.

3. Thermisch hoch belastbares, wärmereflektierendes Low-E Schichtsystem nach mindestens einem der Ansprüche 1 oder 2, **dadurch gekennzeichnet, dass** eine weitere Barriereschicht unter der Funktionsschicht (3) angeordnet ist.

4. Thermisch hoch belastbares, wärmereflektierendes Low-E Schichtsystem nach mindestens einem der Ansprüche 1 bis 3, **dadurch gekennzeichnet, dass** eine weitere Barriereschicht als eine Teilschicht (2.1) innerhalb der Grundschicht (2) und/oder als eine Teilschicht (5.3) innerhalb der Deckschicht (5) angeordnet ist.

5. Thermisch hoch belastbares, wärmereflektierendes Schichtsystem nach mindestens einem der Ansprüche 1 bis 4, **dadurch gekennzeichnet, dass** die Barriereschicht (4) aus einer Nitridverbindung von Aluminium oder Bor besteht.

6. Thermisch hoch belastbares, wärmereflektierendes Schichtsystem nach mindestens einem der Ansprüche 1 bis 5, **dadurch gekennzeichnet, dass** die Grundschicht (2) und/oder die Deckschicht (5) aus mindestens zwei dielektrischen Teilschichten (2.1 bis 2.n; 5.1 bis 5.m) bestehen, welche aus oxidischen Metallverbindungen oder Legierungen und/oder nitridischen Metallverbindungen oder Legierungen hergestellt sind.

7. Thermisch hoch belastbares, wärmereflektierendes Schichtsystem nach mindestens einem der Ansprüche 1 bis 6, **dadurch gekennzeichnet, dass** in der Grundschicht (2) mindestens eine Schicht angeordnet ist, die aus einer Oxid- oder Nitridverbindung von mindestens einem der Elemente Al, Nb, Sn, Si, Ta, Ti, Zn, Zr besteht.

8. Thermisch hoch belastbares, wärmereflektierendes Schichtsystem nach mindestens einem der Ansprüche 1 bis 7, **dadurch gekennzeichnet, dass** in der Deckschicht (5) mindestens eine Schicht angeordnet ist, die aus einer Oxid- oder Nitridverbindung von mindestens einem der Elemente Al, Nb, Sn, Si, Ta, Ti, Zn, Zr besteht.

9. Thermisch hoch belastbares, wärmereflektierendes Schichtsystem nach mindestens einem der Ansprüche 1 bis 8, **dadurch gekennzeichnet, dass** sich das Schichtsystem in seinem Aufbau mehrmals wiederholt.

10. Verfahren zur Herstellung eines Low-E-Schichtsystems nach einem der Ansprüche 1 bis 9, bei dem Substrate (1) in einer Vakuumbeschichtungsanlage mit dem Schichtsystem beschichtet werden, **dadurch gekennzeichnet, dass** alle Schichten (2 bis 5) des Schichtsystems in mehreren Beschichtungsstationen der Vakuumbeschichtungsanlage, die von den Substraten (1) in Vakuumfolge durchlaufen werden, übereinander auf den Substraten (1) aufgebracht werden.

11. Verfahren zur Herstellung eines Low-E-Schichtsystems nach Anspruch 10, **dadurch gekennzeichnet, dass** die Beschichtung mittels magnetfeldgestützter reaktiver Kathodenzerstäubung erfolgt.

12. Verfahren zur Herstellung eines Low-E-Schichtsystems nach Anspruch 10 und 11, **dadurch gekennzeichnet, dass** bei der Herstellung der Barriereschicht ein derartiger Stickstoffpartialdruck verwendet wird, dass eine Nitridschicht entsteht, für deren Extinktionskoeffizienten k(λ) im Wellenlängenbereich 380 nm ≤ λ s 780 nm für alle Wellenlängen λ k(λ) < 0.2 gilt.

13. Verfahren zur Herstellung eines Low-E-Schichtsystems nach Anspruch 10, **dadurch gekennzeichnet, dass** die Beschichtung durch spannungsgepulstes D.C.- oder Mittelfrequenzsputtern erfolgt.

14. Verfahren zur Herstellung eines Low-E-Schichtsystems nach mindestens einem der Ansprüche 10 bis 13, **dadurch gekennzeichnet, dass** der Vakuumbeschichtungsanlage eine Erwärmungseinrichtung nachgeordnet ist, in welcher die fertig beschichteten Substrate (1) für den Einsatz als Sicherheitsglas vorgespannt werden, indem diese auf die erforderlichen Temperaturen von vorzugsweise 630 °C - 670 °C erwärmt und anschließend mittels Druckluft abgekühlt werden.

15. Verfahren zur Herstellung eines Low-E-Schichtsystems nach Anspruch 14, **dadurch gekennzeichnet**, das die Substrate (1) nach dem Erwärmen gebogen und danach abgekühlt werden.

16. Verwendung des mit dem Schichtsystem beschichteten Substrates nach Anspruch 1, **dadurch gekennzeichnet, dass** die beschichteten Substrate (1) zu an sich bekannten Isolierverglasungen weiterverarbeitet werden.

17. Verwendung des beschichteten Substrates nach Anspruch 16, **dadurch gekennzeichnet, dass** mindestens ein beschichtetes Substrat (1) eine Scheibe der Isolierverglasung ist.

18. Verwendung des beschichteten Substrats nach Anspruch 16 oder 17, **dadurch gekennzeichnet, dass** sich das Schichtsystem auf der Innenseite der Isolierverglasung befindet.

19. Verwendung des mit dem Schichtsystem beschichteten Substrats nach Anspruch 1, **dadurch gekennzeichnet, dass** das Substrat (1) zu gebogenem und/oder laminiertem an sich bekannten Sicherheitsglas weiterverarbeitet wird.

20. Verwendung des beschichteten Substrats nach Anspruch 19, **dadurch gekennzeichnet, dass** mindestens eine Scheibe des Sicherheitsglases beschichtet ist.

21. Verwendung des beschichteten Substrats nach Anspruch 19 oder 20, **dadurch gekennzeichnet, dass** sich das Schichtsystem auf der Innenseite des Sicherheitsglases befindet.

## Claims

1. Thermally highly stable, heat-reflecting low-e layer system for transparent substrates (1), preferably glass, having at least the following layer structure, comprising at least one base layer (2) of an oxide compound and/or a nitride compound, at least one functional layer (3) of silver, at least one barrier layer (4) and at least one top layer (5) of an oxide compound and/or a nitride compound,
**characterized in that**
the barrier layer (4) arranged above the functional layer (3) consists of a metal nitride with an extinction coefficient k(X) of k(X) < 0.2 for each X in the wavelength range of 380 nm ≤ λ ≤ 780 nm, wherein the layer system contains neither metal layers nor non-stoichiometric metal compounds both above and below the functional layer (3), and the barrier layer (4) has a thickness of 1 nm to 10 nm.

2. Thermally highly stable, heat-reflecting low-e layer system according to Claim 1,
**characterized in that**
the composition of the barrier layer (4) is to the greatest extent stoichiometric.

3. Thermally highly stable, heat-reflecting low-e layer system according to at least one of Claims 1 and 2, **characterized in that** a further barrier layer is arranged beneath the functional layer (3).

4. Thermally highly stable, heat-reflecting low-e layer system according to at least one of Claims 1 to 3, **characterized in that** a further barrier layer is arranged as a sublayer (2.1) within the base layer (2) and/or as a sublayer (5.3) within the top layer (5).

5. Thermally highly stable, heat-reflecting layer system according to at least one of Claims 1 to 4, **characterized in that** the barrier layer (4) consists of a nitride compound of aluminium or boron.

6. Thermally highly stable, heat-reflecting layer system according to at least one of Claims 1 to 5, **characterized in that** the base layer (2) and/or the top layer (5) comprise at least two dielectric sublayers (2.1 to 2.n; 5.1 to 5.m) which are produced from oxidic metal compounds or alloys and/or nitridic metal compounds or alloys.

7. Thermally highly stable, heat-reflecting layer system according to at least one of Claims 1 to 6, **characterized in that** at least one layer consisting of an oxide compound or nitride compound of at least one of the elements Al, Nb, Sn, Si, Ta, Ti, Zn, Zr is arranged in the base layer (2).

8. Thermally highly stable, heat-reflecting layer system according to at least one of Claims 1 to 7, **characterized in that** at least one layer consisting of an oxide compound or nitride compound of at least one of the elements Al, Nb, Sn, Si, Ta, Ti, Zn, Zr is arranged in the top layer (5).

9. Thermally highly stable, heat-reflecting layer system according to at least one of Claims 1 to 8, **characterized in that** the structure of the layer system is repeated several times.

10. Process for producing a low-e layer system according to one of Claims 1 to 9, in which substrates (1) are coated with the layer system in a vacuum coating installation, **characterized in that** all the layers (2 to 5) in the layer system are applied to the substrates (1) one above another in a plurality of coating stations, through which the substrates (1) pass in vacuum order, in the vacuum coating installation.

11. Process for producing a low-e layer system according to Claim 10, **characterized in that** the coating is effected by means of magnetic-field-enhanced reactive cathode sputtering.

12. Process for producing a low-e layer system according to Claims 10 and 11, **characterized in that** the barrier layer is produced using such a nitrogen partial pressure as to produce a nitride layer with an extinction coefficient k(X) of k(X) < 0.2 for all wavelengths λ in the wavelength range of 380 nm ≤ X s 780 nm.

13. Process for producing a low-e layer system according to Claim 10, **characterized in that** the coating is effected by voltage-pulsed DC or medium-frequency sputtering.

14. Process for producing a low-e layer system according to at least one of Claims 10 to 13, **characterized in that** the vacuum coating installation precedes a heating device, in which the finish-coated substrates (1) are toughened for use as safety glass by being heated to the required temperatures of preferably 630°C - 670°C and then cooled by means of compressed air.

15. Process for producing a low-e layer system according to Claim 14, **characterized in that** the substrates (1) are bent after the heating and then cooled.

16. Use of the substrate coated with the layer system according to Claim 1, **characterized in that** the coated substrates (1) are processed further to give insulating glazing units known per se.

17. Use of the coated substrate according to Claim 16, **characterized in that** at least one coated substrate (1) is a pane of the insulating glazing unit.

18. Use of the coated substrate according to Claim 16 or 17, **characterized in that** the layer system is located on the inside of the insulating glazing unit.

19. Use of the substrate coated with the layer system according to Claim 1, **characterized in that** the substrate (1) is processed further to give bent and/or laminated safety glass known per se.

20. Use of the coated substrate according to Claim 19, **characterized in that** at least one pane of the safety glass is coated.

21. Use of the coated substrate according to Claim 19 or 20, **characterized in that** the layer system is located on the inside of the safety glass.

## Revendications

1. Empilement de couches pouvant être très sollicité thermiquement, réfléchissant la chaleur et à E faible pour des substrats (1) transparents, de préférence en verre, comprenant au moins la structure de couches suivante constituée d'au moins une couche (2) de base en un oxyde et/ou en un nitrure d'au moins une couche (3) fonctionnelle en argent, d'au moins une couche (4) formant barrière et d'au moins une couche (5) de finition en un oxyde et/ou en un nitrure,
**caractérisé en ce que**
la couche (4) formant barrière disposée au-dessus de la couche (3) fonctionnelle, est en un nitrure métallique pour lequel on a des coefficients k(λ) d'extinction dans le domaine des longueurs d'onde 380 nm ≤ λ ≤ 780 nm pour chaque k(λ) < 0,2, l'empilement de couches ne contenant, tant au-dessus qu'au-dessous de la couche (3) fonctionnelle ni couche métallique ni composé métallique non-stoechiométrique, la couche (4) formant barrière ayant une épaisseur de 1 nm à 10 nm.

2. Empilement de couches pouvant être très sollicité thermiquement réfléchissant la chaleur et à faible E suivant la revendication 1,
**caractérisé en ce que**
la couche (4) formant barrière a une composition dans une grande mesure stoechiométrique.

3. Empilement de couches pouvant être très sollicité thermiquement, réfléchissant la chaleur et à faible E suivant au moins l'une des revendications 1 ou 2,
**caractérisé en ce qu'**une autre couche formant barrière est disposée sous la couche (3) fonctionnelle.

4. Empilement de couches pouvant être très sollicité thermiquement et réfléchissant la chaleur et à faible E suivant au moins l'une des revendications 1 à 3,
**caractérisé en ce qu'**une couche formant barrière est disposée en tant que couche (2.1) partielle au sein de la couche (2) de base et/ou en tant que couche (5.3) partielle au sein de la couche (5) de finition.

5. Empilement de couches pouvant être très sollicité thermiquement et réfléchissant la chaleur, suivant l'une au moins des revendications 1 à 4,
**caractérisé en ce que** la couche (4) formant barrière est en nitrure d'aluminium ou de bore.

6. Empilement de couches pouvant être très sollicité thermiquement et réfléchissant la chaleur, suivant au moins l'une des revendications 1 ou 5,
**caractérisé en ce que** la couche (2) de base et/ou la couche (5) de finition est en au moins deux couches (2.1 à 2.n ; 5.1 à 5.m) partielles diélectriques qui sont préparées à partir de composés métalliques oxydés ou d'alliages et/ou de composés métalliques nitrurés ou d'alliages.

7. Empilement de couches pouvant être très sollicité thermiquement et réfléchissant la chaleur, suivant au moins l'une des revendications 1 ou 6,
**caractérisé en ce que**, dans la couche (2) de base, est disposée au moins une couche qui est en un oxyde ou en un nitrure d'au moins l'un des éléments Al, Nb, Sn, Si, Ta, Ti, Zn, Zr.

8. Empilement de couches pouvant être très sollicité thermiquement et réfléchissant la chaleur, suivant au moins l'une des revendications 1 à 7,
**caractérisé en ce que** dans la couche (5) de finition est disposée au moins une couche qui est en un oxyde ou en un nitrure d'au moins des éléments Al, Nb, Sn, Si, Ta, Ti, Zn, Zr.

9. Empilement de couches pouvant être très sollicité thermiquement et réfléchissant la chaleur, suivant au moins l'une des revendications 1 à 8,
**caractérisé en ce que** l'empilement de couches se répète plusieurs fois dans sa structure.

10. Procédé de fabrication d'un empilement de couches à E faible suivant l'une des revendications 1 à 9, dans lequel on revêt de l'empilement de couches des substrats E dans une installation de dépôt sous vide, **caractérisé en ce que** l'on dépose les unes sur les autres sur le substrat (1) toutes les couches (2 à 5), de l'empilement de couches dans plusieurs postes de dépôt de l'installation de dépôt sous vide dans lesquels les substrats (1) passent en succession sous vide.

11. Procédé de fabrication d'un empilement de couches à E faible selon la revendication 10, **caractérisé en ce qu'**on effectue le dépôt au moyen d'une pulvérisation cathodique réactive assistée par champ magnétique.

12. Procédé de fabrication d'un empilement de couches, suivant la revendication 10 ou 11, **caractérisé en ce que**, dans la fabrication de la couche formant barrière, on utilise une pression partielle d'azote telle qu'il se crée une couche de nitrure, dont le coefficient k(λ) d'extinction dans le domaine des longueurs d'onde 380 nm ≤ λ ≤ 780 nm est, pour toutes les longueurs d'onde X, k(λ) < 0,2.

13. Procédé de fabrication d'un empilement de couches, suivant la revendication 10 **caractérisé en ce que** l'on effectue le dépôt par pulvérisation cathodique pulsé en tension, en courant continu ou en moyenne fréquence.

14. Procédé de fabrication d'un empilement de couches, suivant l'une des revendications 10 à 13, **caractérisé en ce qu'**en aval de l'installation de dépôt sous vide est disposé un dispositif d'échauffement, dans lequel les substrats (1) finis de revêtement sont précontraints pour l'utilisation en tant que verre de sécurité, en étant portés aux températures nécessaires, de préférence de 630°C à 670°C, et en étant ensuite refroidis au moyen d'air comprimé.

15. Procédé de fabrication d'un empilement de couches, suivant la revendication 14, **caractérisé en ce que** l'on courbe les substrats (1) après l'échauffement et ensuite on les refroidit.

16. Utilisation du substrat revêtu de l'empilement de couches suivant la revendication 1, **caractérisée en ce que** les substrats (1) revêtus sont retraités en des vitrages isolants en soi connus.

17. Utilisation du substrat revêtu de l'empilement de couches suivant la revendication 16, **caractérisée en ce qu'**au moins un substrat (1) revêtu est une vitre du vitrage isolant.

18. Utilisation du substrat revêtu de l'empilement de couches suivant la revendication 16 ou 17, **caractérisée en ce que** l'empilement de couches se trouve sur la face intérieure du vitrage d'isolant.

19. Utilisation du substrat revêtu de l'empilement de couches suivant la revendication 1, **caractérisée en ce que** le substrat (1) est retraité en un verre de sécurité courbé et/ou feuilleté en soi connu.

20. Utilisation du substrat revêtu, selon la revendication 19, **caractérisée en ce qu'**au moins une vitre du verre de sécurité est revêtue.

21. Utilisation du substrat revêtu, selon la revendication 19 ou 20, **caractérisée en ce que** l'empilement de couches se trouvent sur la face intérieure du verre de sécurité.
